Europäisches Patentamt

European Patent Office

Office européen des brevets

(11) Publication number: **0 265 890**
**A2**

## (12) EUROPEAN PATENT APPLICATION

(21) Application number: 87115690.7

(22) Date of filing: 26.10.87

(51) Int. Cl.4: **B29C 53/60** , **B29C 53/82** , **B29C 33/56** , //B64D33/02

(30) Priority: 24.10.86 IT 6780586

(43) Date of publication of application:
04.05.88 Bulletin 88/18

(84) Designated Contracting States:
**DE ES FR GB NL**

(71) Applicant: **NUOVA SIAI MARCHETTI S.p.A.**
**Via Indipendenza, 2**
**I-21018 Sesto Calende(IT)**

(72) Inventor: **Scarpelli, Enrico**
**Via Piave, 2/E**
**I-21010 Golasecca(IT)**
Inventor: **Bosco, Angelo**
**Via Mocchirolo, 9**
**I-20030 Lentate Sul Seveso(IT)**

(74) Representative: **Prato, Roberto et al**
**c/o Ingg. Carlo e Mario Torta Via Viotti 9**
**I-10121 Torino(IT)**

(54) Method of producing aircraft air intake ducts from composite synthetic material.

(57) A method of producing ducts from composite synthetic material, suitable for use as aircraft air intake ducts, whereby a plaster core, first coated with polyvinyl detaching fluid and then flame-coated with a layer of aluminium, is wound with a synthetic-resin-impregnated yarn followed by a carbon-fibre yarn, and, after being oven-cured, is broken out.

EP 0 265 890 A2

# METHOD OF PRODUCING AIRCRAFT AIR INTAKE DUCTS FROM COMPOSITE SYNTEHTIC MATERIAL

The present invention relates to a method of producing ducts from synthetic material and suitable for use as aircraft air intake ducts.

The aim of the present invention is to provide a straightforward, low-cost method of producing the said ducts, which method also provides for minimising the number of finish operations required after curing.

With this aim in view, according to the present invention, there is provided a method of producing aircraft air intake ducts from synthetic material, characterised by the fact that it comprises stages consisting in :
-producing a core for each said duct;
-subjecting the said core to a first surface treatment consisting in coating the said core with detaching fluid;
-subjecting the said core to a second surface treatment consisting in covering the said core with a layer of electrically-conductive material, preferably a layer of alu minium applied by means of flame-coating;
-covering the said core with a subsequent layer of material impregnated with synthetic resin;
-oven-curing the said resin; and
-removing the said core.

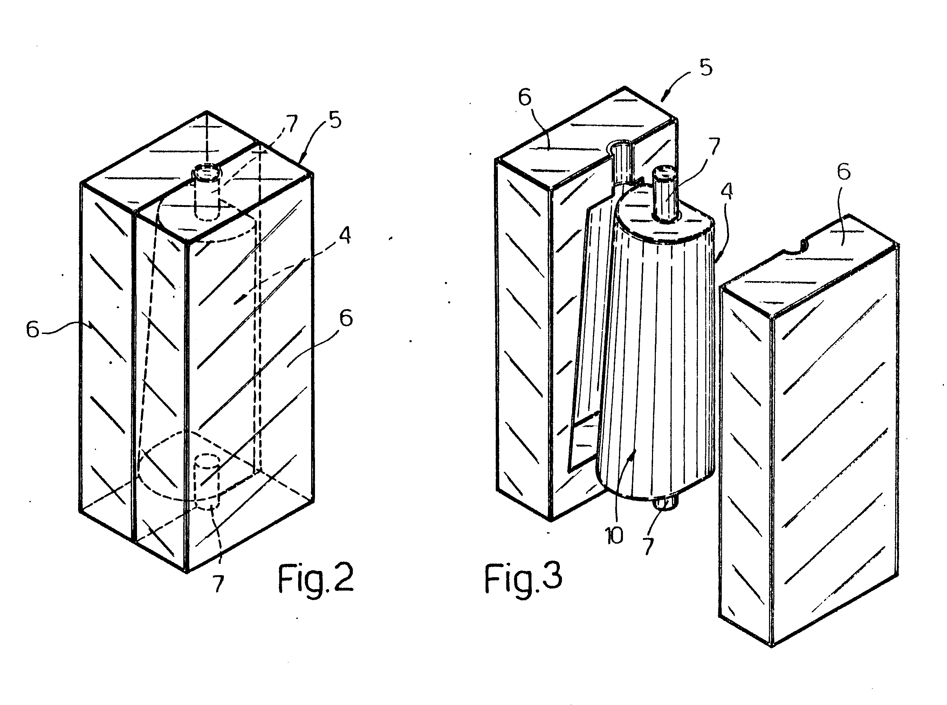

A non-limiting embodiment of the present invention will be described by way of example with reference to the attached drawings, in which :

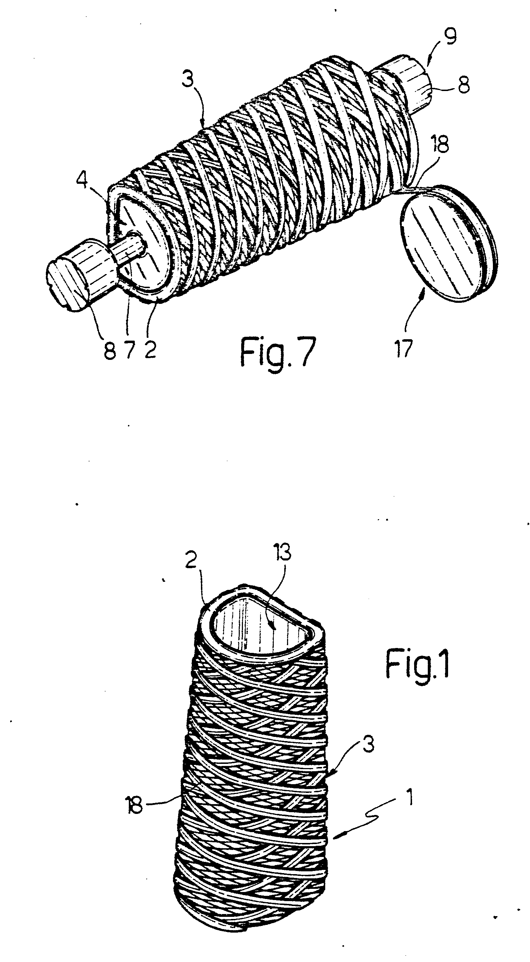

-Fig. 1 shows a view in perspective of an air intake duct produced according to the teachings of the present invention;
-Fig.s 2 and 3 show schematic views in perspective of two successive stages in the production of a core for forming the Fig.1 duct;
-Fig.s 4 to 7 show successive stages in the covering of the Fig.2 and 3 core for producing the Fig.1 duct.

Number 1 in Fig.1 indicates an air intake duct suitable for use on an aircraft (not shown) for conveying air to the engine, and comprising an inner layer 2 of composite synthetic material, and an outer strengthening rib 3.

As shown in Fig.s 2 and 3, duct 1 is formed starting from a core 4 of crushable material, e.g. plaster, cast inside a mold 5 consisting of two opposed half molds 6. In Fig.s 2 and 3, core 4 is shown to be solid and presents an offset shaft 7. In actual practice, however, core 4 is usually tubular in shape and closed at its opposite ends by two plates through which shaft 7 is fitted.

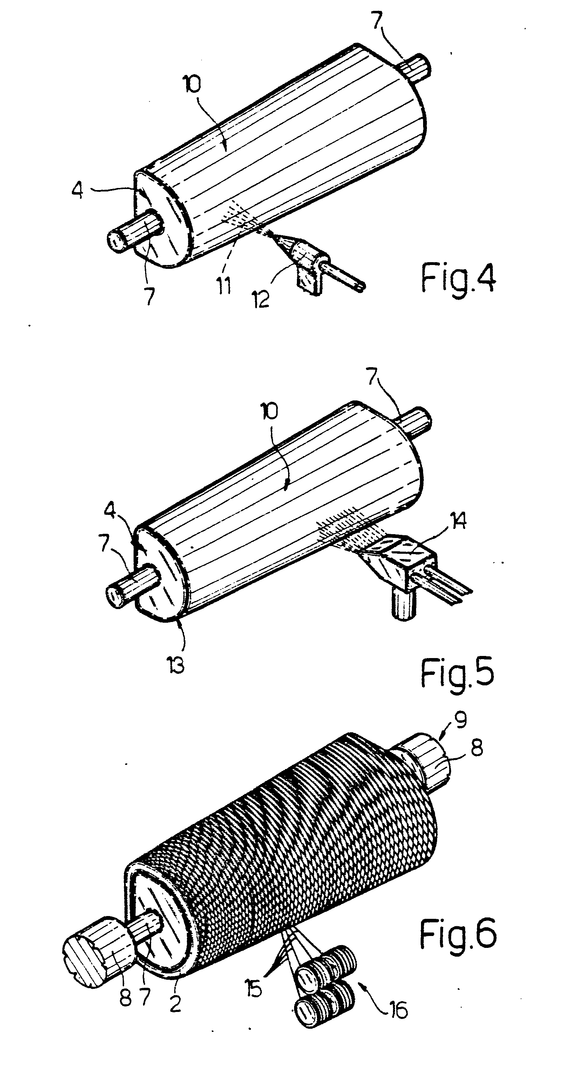

For producing duct 1, the opposite ends of shaft 7 are connected, as shown in Fig.4, to the opposed ends of two coaxial rotary shafts 8 of a drive device 9 designed to turn shaft 7 about its own axis at substantially constant speed.

Before being mounted on to, and turned by, a device 9, core 4 is subjected to a first surface treatment whereby the outer surface 10 of core 4 is coated with detaching fluid 11, preferably consisting of a polyvinyl detaching fluid and usually applied over surface 10 using a brush (not shown) or a spray gun 12.

As shown in Fig.5, core 4 is then subjected to a second surface treatment consisting in applying on to surface 10 a layer of electrically-conductive material, preferably consisting of aluminium applied on to surface 10 using a flame-coating gun 14.

Once layer 13 has been applied, core 4 is mounted on to device 9 and, as shown in Fig.6, wound with a continuous yarn 15, preferably consisting of KEVLAR fibres and impregnated with, preferably, epoxy resin; which yarn 15 is wound about core 4 by a braiding machine 16, so as to produce a braid constituting layer 2.

As shown in Fig.7, the said strengthening rib 3, preferably consisting of a carbon-fibre yarn 18, is wound over layer 2 by a winding machine 17.

Once the said resin has gelled, duct 1 so formed is oven-cured at a temperature of 120°C, after which, core 4 is broken out, and duct 1 cleaned inside and trimmed around the ends.

By virtue of coating core 4 with detaching fluid 11, layer 13 clings, not to core 4, but to the inner surface of layer 2. When core 4 is broken out, therefore, layer 13 forms an electrically-conductive lining designed to prevent surface static charges concentrating inside duct 1.

**Claims**

1) - A method of producing aircraft air intake ducts from synthetic material, characterised by the fact that it comprises stages consisting in :
-producing a core for each said duct;
-subjecting the said core to a first surface treatment consisting in coating the said core with detaching fluid;
-subjecting the said core to a second surface treatment consisting in covering the said core with a layer of electrically-conductive material, preferably a layer of aluminium applied by means of flame-coating;
-covering the said core with a subsequent layer of material impregnated with synthetic resin;
-oven-curing the said resin; and
-removing the said core.

2) - A method as claimed in Claim 1, characterised by the fact that the said electrically-conductive material comprises flame-coated aluminium.

3) - A method as claimed in Claim 1 or 2, characterised by the fact that the said cover material comprises resin-impregnated yarn wound about the said core.

4) - A method as claimed in Claim 3, characterised by the fact that the said yarn consists of KEVLAR.

5) - A method as claimed in Claim 3 or 4, characterised by the fact that the said cover material also comprises carbon-fibre yarn.

6) - A method as claimed in any one of the foregoing Claims, characterised by the fact that the said core is disposable.

7) - A method as claimed in Claim 6, characterised by the fact that the said core is a break-out plaster core.

8) - A method as claimed in Claim 6 or 7, characterised by the fact that the said core is cast from plaster inside a mold.

9) - A method as claimed in any one of the foregoing Claims, characterised by the fact that the said detaching fluid is polyvinyl.

Fig. 7

Fig. 1

Fig.2

Fig.3

0 265 890

Fig.4

Fig.5

Fig.6